# EUROPEAN PATENT APPLICATION

(11) **EP 4 571 251 A1**
(43) Date of publication of application: **18.06.2025**
(21) Application number: 24219520.4
(22) Date of filing: 12.12.2024
(51) Int. Cl.: G01C 21/00, G01S 17/89

(54) **POINT CLOUD POSITIONING METHOD, READABLE STORAGE MEDIUM, AND SMART DEVICE**

(30) Priority: 14.12.2023 CN 202311728389
(71) Applicant: Anhui NIO Autonomous Driving Technology Co., Ltd., Hefei, Anhui 230601 (CN)
(72) Inventor: LI, Qi, Jiading Shanghai (CN); YOU, Zhenxing, Jiading Shanghai (CN); SUN, Li, Jiading Shanghai (CN); YUAN, Hongyuan, Jiading Shanghai (CN); REN, Shaoqing, Jiading Shanghai (CN)
(74) Representative: Vossius & Partner Patentanwälte Rechtsanwälte mbB

(57) **Abstract**

The invention relates to the field of autonomous driving technologies, and specifically provides a point cloud positioning method, a readable storage medium, and a smart device, which are intended to solve the problem of how to improve the accuracy of point cloud positioning. According to the invention, Gaussian distribution transformation is performed on a current point cloud frame collected by a point cloud device, and semantic information is added to the current point cloud frame to obtain a semantic point cloud frame; and the semantic point cloud frame is registered with a semantic Gaussian lightweight map to obtain a pose of the current point cloud frame. Through the above configuration, since there is semantic information in both the point cloud and the map in the invention, point cloud matching may be performed based on the semantic information at the same time as point cloud registration, to obtain a more accurate pose for the current frame of point cloud.

## Description

The present application claims priority of CN patent application 202311728389.7 filed on December 14, 2023 with the title "Point cloud positioning method, readable storage medium, and smart device", the entire of which is incorporated herein by reference.

### Technical Field

The invention relates to the field of autonomous driving technologies, and specifically provides a point cloud positioning method, a readable storage medium, and a smart device.

### Background Art

In autonomous driving technologies, point cloud positioning is usually implemented by registering a point cloud collected by a point cloud acquisition device with a point cloud map.

In conventional methods, an iterative closest point (ICP) or Normal Distribution Transform (NDT) method is usually used for point cloud positioning. Such methods often allow for registration of all points in a frame with a point cloud map. However, in the case of a seasonal change or an environmental change, the point cloud map has declining freshness. resulting in a failure to obtain an accurate positioning result for point cloud positioning.

Accordingly, there is a need in the art for a new point cloud positioning solution to solve the foregoing problem.

### Summary of the Invention

To overcome the foregoing disadvantage, the invention is provided to solve or at least partially solve the problem of how to improve the accuracy of point cloud positioning.

According to a first aspect, the invention provides a point cloud positioning method. The method includes:
obtaining a current point cloud frame collected by a point cloud acquisition device;
performing Gaussian distribution transformation on the current point cloud frame, and adding semantic information to the current point cloud frame after being subjected to the Gaussian distribution transformation, to obtain a semantic point cloud frame; and
registering the semantic point cloud frame with a semantic Gaussian lightweight map to obtain a pose of the current point cloud frame,
where the semantic Gaussian lightweight map is a point cloud map that is represented as a Gaussian distribution expression and that contains the semantic information.

In a technical solution of the foregoing point cloud positioning method, the semantic information includes semantic categories, and different semantic categories have different matching error weights; and
the registering the semantic point cloud frame with a semantic Gaussian lightweight map to obtain a pose of the current point cloud frame includes:
registering the semantic point cloud frame with the semantic Gaussian lightweight map based on the semantic category and a matching error weight for the semantic category, to obtain the pose of the current point cloud frame.

In a technical solution of the foregoing point cloud positioning method, the method further includes:
setting the matching error weight for the semantic category based on a degree of change of a static object corresponding to the semantic category over time,
where the matching error weight is inversely proportional to the degree of change.

In a technical solution of the foregoing point cloud positioning method, the semantic information further includes a confidence level of the semantic category; and
the registering the semantic point cloud frame with the semantic Gaussian lightweight map based on the semantic category and a matching error weight for the semantic category, to obtain the pose of the current point cloud frame includes:
registering the semantic point cloud frame with the semantic Gaussian lightweight map based on the semantic category, the confidence level of the semantic category, and the matching error weight for the semantic category, to obtain the pose of the current point cloud frame.

In a technical solution of the foregoing point cloud positioning method, the method further includes obtaining the semantic Gaussian lightweight map according to the following steps:
building a point cloud map based on a plurality of frames of historical point clouds and poses of the historical point clouds;
performing Gaussian distribution transformation on the point cloud map to obtain a Gaussian lightweight map; and
adding semantic information to the Gaussian lightweight map to obtain the semantic Gaussian lightweight map.

In a technical solution of the foregoing point cloud positioning method, the Gaussian lightweight map includes a plurality of map voxels; and
the adding semantic information to the Gaussian lightweight map to obtain the semantic Gaussian lightweight map includes:
obtaining, based on semantic information of each frame of historical point cloud, a status of occupancy of the semantic information by each map voxel in the Gaussian lightweight map; and
adding the semantic information to the map voxel of the Gaussian lightweight map based on the status of occupancy, to obtain the semantic Gaussian lightweight map.

In a technical solution of the foregoing point cloud positioning method, the status of occupancy includes "occupied"; and
the adding the semantic information to the map voxel of the Gaussian lightweight map based on the status of occupancy, to obtain the semantic Gaussian lightweight map includes:
obtaining, as an occupied voxel, a map voxel whose status of occupancy is "occupied", and filtering out a dynamic object from the occupied voxel; and
adding the semantic information to the occupied voxel after being subjected to filtering, and performing semantic fusion on the semantic information to obtain the semantic Gaussian lightweight map.

In a technical solution of the foregoing point cloud positioning method, the performing Gaussian distribution transformation on the point cloud map to obtain a Gaussian lightweight map includes:
dividing the point cloud map into a plurality of map voxels; and
for each map voxel, obtaining a mean and a covariance of a point cloud in a current map voxel, and using the mean and the covariance to represent a Gaussian distribution of the point cloud in the current map voxel, to implement the Gaussian distribution transformation of the point cloud map, so as to obtain the Gaussian lightweight map.

In a technical solution of the foregoing point cloud positioning method, the performing Gaussian distribution transformation on the current point cloud frame, and adding semantic information to the current point cloud frame after being subjected to the Gaussian distribution transformation, to obtain a semantic point cloud frame includes:
dividing the current point cloud frame into a plurality of point cloud voxels;
for each point cloud voxel, obtaining a mean and a covariance of a point cloud in a current point cloud voxel, and using the mean and the covariance to represent a Gaussian distribution of the point cloud in the current point cloud voxel, to implement the Gaussian distribution transformation of the current point cloud frame; and
adding the semantic information to the point cloud voxel after being subjected to the Gaussian distribution transformation, to obtain the semantic point cloud frame.

According to a second aspect, a computer-readable storage medium is provided. A plurality of program codes are stored in the computer-readable storage medium, and the program codes are adapted to be loaded and executed by a processor to perform the point cloud positioning method in any one of the technical solutions of the foregoing point cloud positioning method.

According to a third aspect, a smart device is provided, including:
at least one processor;
and a memory in communication connection with the at least one processor,
where the memory stores a computer program that, when executed by the at least one processor, implements the point cloud positioning method in any one of the technical solutions of the foregoing point cloud positioning method.

The foregoing one or more technical solutions of the invention have at least one or more of the following beneficial effects.

In implementation of the technical solutions of the invention, the invention allows for performing the Gaussian distribution transformation on the current point cloud frame collected by the point cloud device, and adding the semantic information to the current point cloud frame to obtain the semantic point cloud frame, and registering the semantic point cloud frame with the semantic Gaussian lightweight map to obtain the pose of the current point cloud frame. Through the above configuration, since there is semantic information in both the point cloud and the map in the invention, point cloud matching may be performed based on the semantic information at the same time as point cloud registration, to obtain a more accurate pose for the current frame of point cloud.

Further, different matching error weights may be set for different semantic categories in the semantic information, and then a higher matching error weight may be set for the semantic category that has a greater impact on the accuracy of a matching result during the registration process, so that a more accurate pose is obtained for the current frame of point cloud during the matching process.

Further, the matching error weights may be set for the semantic categories based on the degree of change of static objects corresponding to different semantic categories over time, where a semantic category with a higher degree of change over time has a lower matching error weight, and conversely, a semantic category with a lower degree of change over time has a higher matching error weight. In this way, objects with a higher degree of change over time have lower impact during the registration process, and objects with a lower degree of change over time have a higher level of confidence for the error information. Therefore, a more accurate pose is obtained for the current frame of point cloud.

### Brief Description of the Drawings

The disclosed content of the invention will become more readily understood with reference to the accompanying drawings. Those skilled in the art readily understand that these accompanying drawings are merely for illustrative purposes and are not intended to limit the scope of protection of the invention. In the drawings:
FIG. 1 is a schematic flowchart of main steps of a point cloud positioning method according to an embodiment of the invention;
FIG. 2 is a schematic flowchart of main steps of a point cloud positioning method according to an implementation of an embodiment of the invention; and
FIG. 3 is a schematic diagram of connection between a memory and a processor in a smart device according to an embodiment of the invention.

### Detailed Description of Embodiments

Some implementations of the invention are described below with reference to the accompanying drawings. Those skilled in the art should understand that these implementations are only used to explain the technical principles of the invention, and are not intended to limit the scope of protection of the invention.

In the description of the invention, a "module" or "processor" may include hardware, software, or a combination thereof. A module may include a hardware circuit, various suitable sensors, a communication port, and a memory, may include a software part, for example, program code, or may be a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that can store program code, for example, a magnetic disk, a hard disk, an optical disc, a flash memory, a read-only memory, or a random access memory. The term "A and/or B" indicates all possible combinations of A and B, for example, only A, only B, or A and B. The term "at least one A or B" or "at least one of A and B" has a meaning similar to "A and/or B" and may include only A, only B, or A and B. The terms "a/an" and "this" in the singular form may also include the plural form.

Terms are explained below.

An automated driving system (ADS) means that the system continuously performs all dynamic driving tasks (DDTs) within its own operational domain design (ODD). That is, a machine system is allowed to fully undertake the task of automatic vehicle control only under specified conditions of appropriate driving scenarios. Specifically, the system is activated when the vehicle meets the ODD conditions, such that the system takes over from a human driver as the driving subject of the vehicle. The dynamic driving task (DDT) refers to continuous lateral (left and right steering) and longitudinal motion control (acceleration, deceleration, and constant speed) of the vehicle, as well as detection of and response to a target and an event in a driving environment. The operational domain design (ODD) refers to conditions under which the automated driving system can operate safely, and the conditions set therefor can include a geographical location, the type of a road, a range of speed, weather, time, national and local traffic laws and regulations, etc.

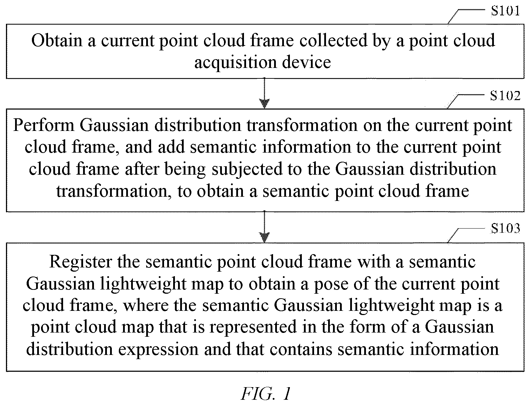

Referring to FIG. 1, FIG. 1 is a schematic flowchart of main steps of a point cloud positioning method according to an embodiment of the invention. As shown in FIG. 1, the point cloud positioning method in this embodiment of the invention mainly includes steps S101 to S 103 below.

Step S101: Obtain a current point cloud frame collected by a point cloud acquisition device.

In this embodiment, the current frame of point cloud may be obtained by the point cloud acquisition device.

In an implementation, the point cloud acquisition device may be a laser radar, a 4D imaging millimeter-wave radar, etc.

Step S102: Perform Gaussian distribution transformation on the current point cloud frame, and add semantic information to the current point cloud frame after being subjected to the Gaussian distribution transformation, to obtain a semantic point cloud frame.

In this embodiment, the Gaussian distribution transformation may be performed on the current point cloud frame, and the semantic information may be added to the current point cloud frame, to obtain the semantic point cloud frame.

In an implementation, the semantic information may include a semantic category and a confidence level of the semantic category.

Step S103: Register the semantic point cloud frame with a semantic Gaussian lightweight map to obtain a pose of the current point cloud frame, where the semantic Gaussian lightweight map is a point cloud map that is represented as a Gaussian distribution expression and that contains the semantic information.

In this embodiment, the semantic point cloud frame may be registered with the semantic Gaussian lightweight map to obtain the pose of the current point cloud frame. The semantic Gaussian lightweight map is a point cloud map that is represented as a Gaussian distribution expression and that contains semantic information.

In an implementation, a probability distribution distance between the semantic point cloud frame and the semantic Gaussian lightweight map may be calculated based on the Gaussian distribution of the semantic point cloud frame and of the semantic Gaussian lightweight map, the semantic point cloud frame may be matched with the semantic information of the semantic Gaussian lightweight map to obtain a semantic matching result, and the pose of the current point cloud frame may be obtained based on the probability distribution distance and the semantic matching result.

Based on the foregoing steps S101 to S103, according to this embodiment of the invention, the Gaussian distribution transformation is performed on the current point cloud frame collected by the point cloud device, and the semantic information is added to the current point cloud frame to obtain the semantic point cloud frame; and the semantic point cloud frame is registered with the semantic Gaussian lightweight map to obtain the pose of the current point cloud frame. Through the above configuration, since there is semantic information in both the point cloud and the map in this embodiment of the invention, point cloud matching may be performed based on the semantic information at the same time as point cloud registration, to obtain a more accurate pose for the current frame of point cloud.

Steps S 102 and S 103, and the specific steps of obtaining the semantic Gaussian lightweight map are further described separately below.

In an implementation of this embodiment of the invention, step S 102 may further include the following steps S 1021 to S 1023.

Step S 1021: Divide the current point cloud frame into a plurality of point cloud voxels.

Step S1022: For each point cloud voxel, obtain a mean and a covariance of a point cloud in a current point cloud voxel, and use the mean and the covariance to represent a Gaussian distribution of the point cloud in the current point cloud voxel, to implement the Gaussian distribution transformation of the current point cloud frame.

Step S 1023 : Add the semantic information to the point cloud voxel after being subjected to the Gaussian distribution transformation, to obtain the semantic point cloud frame.

In this implementation, a point cloud voxel of a preset size may be selected, the current frame of point cloud may be divided based on the size of the point cloud voxel, and the mean and the covariance of the point cloud in each point cloud voxel may be calculated and then used to represent the Gaussian distribution of the point cloud in the current point cloud voxel, to implement the Gaussian distribution transformation of the current point cloud frame. Then, the semantic information is added to each point cloud voxel to obtain the semantic point cloud frame.

In an implementation, a main semantic category in the point cloud voxel and a confidence level of the semantic category may be acquired, and the semantic category and its corresponding confidence level may be added to the point cloud voxel as semantic information.

In an implementation, the point cloud voxel may be a voxel with a meter-level resolution.

In an implementation of this embodiment of the invention, the semantic Gaussian lightweight map may be obtained according to the following steps S201 to S203.

Step S201: Build a point cloud map based on a plurality of frames of historical point clouds and poses of the historical point clouds.

In this implementation, the plurality of frames of historical point clouds may be superimposed based on the plurality of frames of historical point clouds and the poses of the historical point clouds, to obtain the point cloud map.

Step S202: Perform Gaussian distribution transformation on the point cloud map to obtain a Gaussian lightweight map.

In this implementation, step S202 may further include the following steps S2021 and S2022.

Step S2021: Divide the point cloud map into a plurality of map voxels.

Step S2022: For each map voxel, obtain a mean and a covariance of a point cloud in a current map voxel, and use the mean and the covariance to represent a Gaussian distribution of the point cloud in the current map voxel, to implement the Gaussian distribution transformation of the point cloud map, so as to obtain the Gaussian lightweight map.

In this implementation, a map voxel of a preset size may be selected, the point cloud map may be divided based on the size of the map voxel, and the mean and the covariance of the point cloud in each map voxel are calculated and then used as the Gaussian distribution of the point cloud in the current map voxel, to implement the Gaussian distribution transformation of the point cloud map, so as to obtain the Gaussian lightweight map.

In an implementation, the map voxel has the same size as the point cloud voxel.

Step S203: Add semantic information to the Gaussian lightweight map to obtain the semantic Gaussian lightweight map.

In this implementation, step S203 may further include the following steps S2031 and S2032.

Step S2031: Obtain, based on semantic information of each frame of historical point cloud, a status of occupancy of the semantic information by each map voxel in the Gaussian lightweight map.

In this implementation, the status of occupancy of the semantic information by each map voxel in the Gaussian lightweight map may be determined based on the semantic information of each historical point cloud. Specifically, the real world corresponding to the historical point clouds may be discretized into map voxels, and then each map voxel may be classified as "occupied", "unoccupied", or "undetected" based on the semantic information. "Occupied" means that a proportion of an object corresponding to the semantic information in the current map voxel is greater than or equal to a preset threshold. "Unoccupied" means that a proportion of an object corresponding to the semantic information in the current map voxel is less than a preset threshold. "Undetected" means that a point cloud in an area is not collected by the point cloud acquisition device.

Step S2032: Add the semantic information to the map voxel of the Gaussian lightweight map based on the status of occupancy, to obtain the semantic Gaussian lightweight map.

In this implementation, step S2032 may further include the following steps S20321 and S20322.

Step S20321: Obtain, as an occupied voxel, a map voxel whose status of occupancy is "occupied", and filter out a dynamic object from the occupied voxel.

In this implementation, for the dynamic object, the status of occupancy of the object may change in a plurality of frames of historical point clouds. Therefore, the dynamic object may be filtered out to avoid interference with the status of occupancy during movement of the dynamic object.

In an implementation, the dynamic object may be filtered out based on spatiotemporal geometric consistency of the object. Specifically, the plurality of frames of historical point clouds may be converted into the same coordinate space based on the plurality of frames of historical point clouds and the poses of the historical point clouds, to filter out the dynamic object.

Step S20322: Add the semantic information to the occupied voxel after being subjected to filtering, and perform semantic fusion on the semantic information to obtain the semantic Gaussian lightweight map.

In this implementation, the semantic information may be added to the occupied voxel after being subjected to filtering. The semantic information here may be semantic information about static occupancy, that is, the occupied object is a static object. In addition, semantic fusion is performed on the plurality of frames of historical point clouds corresponding to the semantic information, to obtain the semantic Gaussian lightweight map.

In an implementation, the semantic fusion may be Bayesian fusion.

In an implementation of this embodiment of the invention, the semantic information may include semantic categories, and different semantic categories may have different matching error weights. Step S103 may be further configured as a step of
register the semantic point cloud frame with the semantic Gaussian lightweight map based on the semantic category and a matching error weight for the semantic category, to obtain the pose of the current point cloud frame.

In this implementation, different matching error weights may be set for different semantic categories, so that the semantic point cloud frame is registered with the semantic Gaussian lightweight map based on the semantic category and its corresponding matching error weight. That is, during the registration process, different semantic categories have different error weights during a matching optimization process.

In an implementation, the matching error weight may be set for the semantic category based on a degree of change of a static object corresponding to the semantic category over time. The matching error weight is inversely proportional to the degree of change.

In this implementation, the matching error weight may be set for the semantic category based on the degree of change of the static object corresponding to the semantic category over time. For example, semantic categories such as buildings, road signs, and tree trunks may not change significantly over time, and therefore, higher matching error weights may be set for these semantic categories. In contrast, semantic categories such as shrubs and leaves may change significantly over time, and therefore, lower matching error weights may be set for these semantic categories. That is, error information that does not change over a long period of time has a higher level of confidence, so that a more accurate pose is obtained.

In an implementation, the semantic point cloud frame may be registered with the semantic Gaussian lightweight map based on the semantic category, a confidence level of the semantic category in the semantic point cloud frame, and a matching error weight for the semantic category, to obtain the pose of the current point cloud frame.

In this implementation, the semantic category, the confidence level of the semantic category, and the matching error weight for the semantic category can be comprehensively considered to implement registration of the semantic point cloud frame with the Gaussian lightweight map, to obtain a more accurate pose.

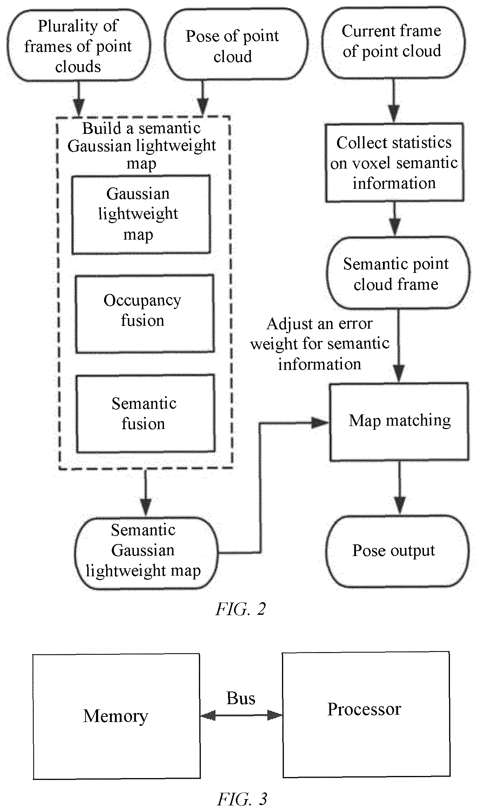

In an implementation, referring to FIG. 2, FIG. 2 is a schematic flowchart of main steps of a point cloud positioning method according to an implementation of an embodiment of the invention. As shown in FIG. 2, in this implementation, a semantic Gaussian lightweight map can be built based on a plurality of frames of point clouds (historical point clouds) and poses of the point clouds. Building the semantic Gaussian lightweight map involves building a Gaussian lightweight map, occupancy fusion, and semantic fusion, to obtain the semantic Gaussian lightweight map. Moreover, statistics on voxel semantic information of the current point cloud frame is collected to obtain the semantic point cloud frame, the error weight (matching error weight) is adjusted for the semantic information, and map matching is performed between the semantic point cloud frame and the semantic Gaussian lightweight, to obtain a pose output.

It should be noted that, although the steps are described in a particular sequence in the foregoing embodiments, those skilled in the art may understand that, to implement the effects of the invention, different steps are not necessarily performed in such a sequence, and the steps may be performed simultaneously (in parallel) or in another sequence. These changes fall within the scope of protection of the invention.

Those skilled in the art may understand that all or some of the procedures in the methods in the foregoing embodiments of the invention may be implemented by using a computer program instructing related hardware. The computer program may be stored in a computer-readable storage medium. When the computer program is executed by a processor, the steps in the foregoing method embodiments may be implemented. The computer program includes computer program code, and the computer program code may be in a source code form, an object code form, a form of an executable file, some intermediate forms, or the like. The computer-readable storage medium may include: any entity or apparatus that can carry the computer program code, a medium, a USB flash drive, a removable hard disk, a magnetic disk, an optical disc, a computer memory, a read-only memory, a random access memory, an electric carrier signal, a telecommunications signal, a software distribution medium, and the like. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, the invention also provides a computer-readable storage medium. In an embodiment of the computer-readable storage medium according to the invention, the computer-readable storage medium may be configured to store a program for performing the point cloud positioning method of the foregoing method embodiment, and the program may be loaded and executed by a processor to implement the foregoing point cloud positioning method. For ease of description, only parts related to the embodiments of the invention are shown. For specific technical details that are not disclosed, reference may be made to the method part of the embodiments of the invention. The computer-readable storage medium may be a storage apparatus device formed by various electronic devices. Optionally, the computer-readable storage medium in this embodiment of the invention is a non-transitory computer-readable storage medium.

Further, the invention also provides a smart device. The smart device may include: at least one processor; and a memory in communication connection with the at least one processor, where the memory stores a computer program that, when executed by the at least one processor, implements the method described in any one of the foregoing embodiments.

The smart device in an embodiment of the invention may include a driving device, a smart car, a robot, etc. Referring to FIG. 3, FIG. 3 is a schematic diagram of connection between a memory and a processor in a smart device according to an embodiment of the invention. As shown in FIG. 3, FIG. 3 exemplarily shows a communication connection established between the memory and the processor through a bus.

In some embodiments of the invention, the smart device further includes at least one sensor configured to sense information. The sensor is in communication connection with any type of processor mentioned in the invention. Optionally, the smart device further includes an automated driving system configured to guide the smart device to drive autonomously or assist in driving. The processor is in communication with the sensor and/or the automated driving system to implement the method described in any one of the foregoing embodiments.

Further, it should be understood that, because the configuration of modules is merely intended to illustrate functional units of the apparatus of the invention, physical devices corresponding to these modules may be a processor itself, or part of software, part of hardware, or part of a combination of software and hardware in the processor. Therefore, the quantity of modules in the figure is merely illustrative.

Those skilled in the art can understand that the modules in the apparatus may be adaptively split or combined. Such a split or combination of specific modules does not cause the technical solutions to depart from the principle of the invention. Therefore, technical solutions after any such split or combination shall all fall within the scope of protection of the invention.

The related user personal information that may be involved in the embodiments of the invention is all personal information that is provided actively by a user in a process of using a product/service or is generated by using a product/service and that is obtained through authorization by the user based on an appropriate purpose of a service scenario strictly in accordance with requirements of laws and regulations and in accordance with the principles of legality, legitimacy, and necessity.

The user personal information processed by the applicant may vary according to a specific product/service scenario, depends on the specific scenario in which the user uses the product/service, and may involve account information, device information, driving information, vehicle information, or other related information of the user. The applicant treats and handles the user personal information with a high degree of diligence.

The applicant attaches great importance to the security of the user personal information and has taken reasonable and feasible security measures in line with industry standards to protect the user information and prevent unauthorized access, public disclosure, use, modification, damage or loss of the personal information.

Heretofore, the technical solutions of the invention have been described with reference to the preferred implementations shown in the accompanying drawings. However, those skilled in the art can readily understand that the scope of protection of the invention is apparently not limited to these specific implementations. Without departing from the principles of the invention, those skilled in the art may make equivalent changes or replacements to related technical features. All the technical solutions obtained after these changes or replacements fall within the scope of protection of the invention.

## Claims

1. A point cloud positioning method, comprising:
obtaining a current point cloud frame collected by a point cloud acquisition device;
performing Gaussian distribution transformation on the current point cloud frame, and adding semantic information to the current point cloud frame after being subjected to the Gaussian distribution transformation, to obtain a semantic point cloud frame; and
registering the semantic point cloud frame with a semantic Gaussian lightweight map to obtain a pose of the current point cloud frame,
wherein the semantic Gaussian lightweight map is a point cloud map that is represented as a Gaussian distribution expression and that contains the semantic information.

2. The point cloud positioning method according to claim 1, wherein the semantic information comprises semantic categories, and different semantic categories have different matching error weights; and
the registering the semantic point cloud frame with a semantic Gaussian lightweight map to obtain a pose of the current point cloud frame comprises:
registering the semantic point cloud frame with the semantic Gaussian lightweight map based on the semantic category and a matching error weight for the semantic category, to obtain the pose of the current point cloud frame.

3. The point cloud positioning method according to claim 2, wherein the method further comprises:
setting the matching error weight for the semantic category based on a degree of change of a static object corresponding to the semantic category over time,
wherein the matching error weight is inversely proportional to the degree of change.

4. The po int cloud positioning method according to claim 2 or 3, wherein the semantic information further comprises a confidence level of the semantic category; and
the registering the semantic point cloud frame with the semantic Gaussian lightweight map based on the semantic category and a matching error weight for the semantic category, to obtain the pose of the current point cloud frame comprises:
registering the semantic point cloud frame with the semantic Gaussian lightweight map based on the semantic category, the confidence level of the semantic category, and the matching error weight for the semantic category, to obtain the pose of the current point cloud frame.

5. The point cloud positioning method according to any one of claims 1 to 4, wherein the method further comprises obtaining the semantic Gaussian lightweight map according to the following steps:
building a point cloud map based on a plurality of frames of historical point clouds and poses of the historical point clouds;
performing Gaussian distribution transformation on the point cloud map to obtain a Gaussian lightweight map; and
adding semantic information to the Gaussian lightweight map to obtain the semantic Gaussian lightweight map.

6. The point cloud positioning method according to any one of claims 1 to 5, wherein the Gaussian lightweight map comprises a plurality of map voxels; and
the adding semantic information to the Gaussian lightweight map to obtain the semantic Gaussian lightweight map comprises:
obtaining, based on semantic information of each frame of historical point cloud, a status of occupancy of the semantic information by each map voxel in the Gaussian lightweight map; and
adding the semantic information to the map voxel of the Gaussian lightweight map based on the status of occupancy, to obtain the semantic Gaussian lightweight map.

7. The point cloud positioning method according to claim 6, wherein the status of occupancy comprises "occupied"; and
the adding the semantic information to the map voxel of the Gaussian lightweight map based on the status of occupancy, to obtain the semantic Gaussian lightweight map comprises:
obtaining, as an occupied voxel, a map voxel whose status of occupancy is "occupied", and filtering out a dynamic object from the occupied voxel; and
adding the semantic information to the occupied voxel after being subjected to filtering, and performing semantic fusion on the semantic information to obtain the semantic Gaussian lightweight map.

8. The point cloud positioning method according to any one of claims 5 to 7, wherein
the performing Gaussian distribution transformation on the point cloud map to obtain a Gaussian lightweight map comprises:
dividing the point cloud map into a plurality of map voxels; and
for each map voxel, obtaining a mean and a covariance of a point cloud in a current map voxel, and using the mean and the covariance to represent a Gaussian distribution of the point cloud in the current map voxel, to implement the Gaussian distribution transformation of the point cloud map, so as to obtain the Gaussian lightweight map.

9. The point cloud positioning method according to any one of claims 1 to 8, wherein
the performing Gaussian distribution transformation on the current point cloud frame, and adding semantic information to the current point cloud frame after being subjected to the Gaussian distribution transformation, to obtain a semantic point cloud frame comprises:
dividing the current point cloud frame into a plurality of point cloud voxels;
for each point cloud voxel, obtaining a mean and a covariance of a point cloud in a current point cloud voxel, and using the mean and the covariance to represent a Gaussian distribution of the point cloud in the current point cloud voxel, to implement the Gaussian distribution transformation of the current point cloud frame; and
adding the semantic information to the point cloud voxel after being subjected to the Gaussian distribution transformation, to obtain the semantic point cloud frame.

10. A computer-readable storage medium configured to store a plurality of program codes, wherein the program codes are adapted to be loaded and executed by a processor to perform the point cloud positioning method according to any one of claims 1 to 9.

11. A smart device, comprising:
at least one processor;
and a memory in communication connection with the at least one processor,
wherein the memory stores a computer program that, when executed by the at least one processor, implements the point cloud positioning method according to any one of claims 1 to 9.
